# EUROPÄISCHE PATENTSCHRIFT

(11) **EP 3 820 256 B1**
(45) Veröffentlichungstag und Bekanntmachung des Hinweises auf die Patenterteilung: **10.01.2024**
(21) Anmeldenummer: 20205843.4
(22) Anmeldetag: 05.11.2020
(51) Int. Cl.: H05B 47/16

(54) **VERFAHREN SOWIE EINRICHTUNG ZUM AUTOMATISIERTEN EIN- UND AUSSCHALTEN EINER BELEUCHTUNGSANLAGE**
METHOD AND DEVICE FOR AUTOMATICALLY SWITCHING ON AND OFF A LIGHTING INSTALLATION
PROCÉDÉ ET DISPOSITIF POUR LA MISE EN MARCHE ET L'ARRÊT AUTOMATIQUE D'UNE INSTALLATION D'ÉCLAIRAGE

(30) Priorität: 08.11.2019 DE 102019130261
(43) Veröffentlichungstag der Anmeldung: 12.05.2021
(73) Patentinhaber: Universität des Saarlandes, 66123 Saarbrücken (DE)
(72) Erfinder: OHLMANN, Achim, 66649 Oberthal (DE)
(74) Vertreter: Zeiner, Johannes Michael

(56) Entgegenhaltungen:
- EP-A2- 0 762 244
- EP-A2- 1 632 823
- DE-A1- 4 002 597
- DE-A1-102009 025 801

## Beschreibung

Die Erfindung betrifft ein Verfahren zum automatisierten Ein- und Ausschalten einer Beleuchtungsanlage zur Beleuchtung eines Verkehrsweges innerhalb oder außerhalb eines Gebäudes, wobei ein Leuchtmittel der Beleuchtungsanlage in Abhängigkeit von einem Ort, an dem sich das Gebäude befindet, und einem erwarteten Benutzungszeitraum ein- oder ausgeschaltet wird.

Ferner betrifft die Erfindung eine Einrichtung zum automatisierten Ein- und Ausschalten einer Beleuchtungsanlage zur Beleuchtung eines Verkehrsweges innerhalb oder außerhalb eines Gebäudes, die ein Mittel zum zeitgesteuerten Ein- und Ausschalten eines Leuchtmittels umfasst, das dazu eingerichtet ist, das Leuchtmittel in Abhängigkeit von einem Ort, an dem sich das Gebäude befindet, und einem erwarteten Benutzungszeitraum ein- oder auszuschalten.

Zeitschaltuhren sind aus EP 0 762 244 A2 , DE 10 2009 025 801 A1 und EP 1 632 823 A2 bekannt.

Eine Schalteinrichtung für eine Beleuchtungsanlage ist aus DE 40 02 597 A1 bekannt.

Aus dem Stand der Technik sind weitere derartige Verfahren und Einrichtungen bekannt. Ein Verkehrsweg kann beispielsweise ein Flur oder ein Treppenhaus in einem Bürogebäude oder ein Fußgängerweg an einer Straße sein, entlang dem bzw. der mehrere Lampen angebracht sind, die zeitgesteuert oder durch einen Bewegungsmelder für einen bestimmten Zeitraum aktiviert, das heißt eingeschaltet werden. Am Ende des Zeitraums erfolgt ein automatisches Ausschalten.

Nachteilig ist, dass bekannte Verfahren keine Notwendigkeit einer Beleuchtung des Verkehrsweges berücksichtigen. Wird der Verkehrsweg nicht benutzt, ist die Beleuchtungsanlage trotzdem eingeschaltet. Dadurch wird Energie verschwendet.

Nachteilig bei Verwendung eines Bewegungsmelders ist, dass dieser störanfällig ist und dessen Nachrüstung aufwändige Umbaumaßnahmen erfordert, insbesondere ein Verlegen von zusätzlichen Kabeln. Selbiges gilt bei Verwendung eines Präsenzmelders.

Der vorliegenden Erfindung liegt die Aufgabe zugrunde, ein Verfahren der eingangs genannten Art zu schaffen, das eine besonders energieeffiziente Nutzung einer Beleuchtungsanlage ermöglicht.

Erfindungsgemäß wird die Aufgabe durch ein Verfahren gemäß Anspruch 1 und eine Einrichtung gemäß Anspruch 7 gelöst. Weitere vorteilhafte Ausführungsformen ergeben sich aus den Unteransprüchen.

Vorteilhaft sind keine Umbauarbeiten an dem Verkehrsweg erforderlich. Die für die Durchführung des Verfahrens erforderlichen elektronischen Bauteile ergänzen eine elektrische Steuerung einer Beleuchtungsanlage und können auf einfache Art und Weise in einen bestehenden Schaltkasten eingebaut werden.

Sowohl eine astronomische Zeitschaltuhr als auch ein elektromagnetisch oder elektrisch betätigtes Zeitrelais können beispielsweise eine vorhandene elektrische Steuerung der Beleuchtungsanlage in einem bestehenden elektrischen Schaltkasten ergänzen.

Dadurch, dass das elektromagnetisch oder elektrisch betätigte Zeitrelais von der programmierbaren Steuereinheit über einen Impulsgeber angesteuert, das heißt betätigt wird, erfolgt ein Einschalten des Leuchtmittels innerhalb des erwarteten Benutzungszeitraums, sofern kein ausreichendes Tageslicht vorhanden ist. Ist ein Einschalten des Leuchtmittels erforderlich, so wird von der programmierbaren Steuereinheit über den Impulsgeber das Zeitrelais angesteuert und ein Einschalten des Leuchtmittels periodisch getriggert. Während der periodischen Triggerung durch den Impulsgeber bleibt das Leuchtmittel eingeschaltet. Vorteilhaft wird die Beleuchtungsanlage nur dann automatisch eingeschaltet, wenn eine Verkehrswegbeleuchtung tatsächlich erforderlich ist und automatisch ausgeschaltet, sofern ausreichend Tageslicht während des erwarteten Benutzungszeitraums zur Verfügung steht.

Der erwartete Benutzungszeitraum ist ein Zeitraum, zu dem der Verkehrsweg benutzt wird, beispielsweise während einer Kernarbeitszeit, zu der in einem Bürogebäude gearbeitet wird.

Der Ort, an dem sich das Gebäude befindet ist dessen geografische Position, von der abhängt, wann in dem erwarteten Benutzungszeitraum ausreichend Tageslicht verfügbar ist, damit der Verkehrsweg zur sicheren Benutzung ausreichend beleuchtet ist und eine Beleuchtung durch die Beleuchtungsanlage nicht erforderlich ist.

Zweckmäßigerweise wird das Leuchtmittel innerhalb des erwarteten Benutzungszeitraumes nur dann automatisch eingeschaltet, sofern an dem Ort, an dem sich das Gebäude befindet, kein zur Beleuchtung des Verkehrsweges ausreichendes Tageslicht zur Verfügung steht. Vorteilhaft wird das Leuchtmittel nicht eingeschaltet, wenn dies nicht erforderlich ist.

Damit bei zur Beleuchtung des Verkehrsweges nicht ausreichendem Tageslicht das Leuchtmittel automatisch eingeschaltet und/oder bei ausreichendem Tageslicht innerhalb des erwarteten Benutzungszeitraums automatisch ausgeschaltet werden kann, ist ein Ein- und Ausschaltmittel vorgesehen, das eine programmierbare Steuereinheit aufweist, die als vorzugsweise fernprogrammierbare astronomische Zeitschaltuhr ausgebildet ist. Vorteilhaft kann ein einziges Bauteil weltweit eingesetzt werden, da anhand astronomischer Daten für jeden Ort und jeden Tag eines Jahres bestimmbar ist, wann Tageslicht zur Beleuchtung des Verkehrsweges zur Verfügung steht. Idealerweise dienen hierzu Sonnenaufgangs- und Sonnenuntergangszeiten an dem Ort.

Vorteilhaft ist die Verwendung einer astronomischen Zeitschaltuhr mit zwei Kanälen, von denen einer zur Ansteuerung des Leuchtmittels in Abhängigkeit von einem Ort, an dem sich das Gebäude befindet, vorgesehen ist und ein zweiter zur Ansteuerung in Abhängigkeit von einem definierten, programmierten Benutzungszeitraum. Dadurch ist möglich, dass das Leuchtmittel in Abhängigkeit von einem definierten Benutzungszeitraum, beispielsweise einer Kernarbeitszeit in einem Bürogebäude, und in Abhängigkeit von vorhandenem Tageslicht automatisch ein- oder ausgeschaltet wird. Ein manuelles Einschalten der Beleuchtungsanlage durch einen Benutzer des Verkehrsweges ist nicht unbedingt erforderlich.

Besonders vorteilhaft ist die Verwendung einer astronomischen Zeitschaltuhr mit mehr als zwei Kanälen, insbesondere mit 3 oder 4 Kanälen. Ein erster Kanal kann zur Ansteuerung des Leuchtmittels in Abhängigkeit von einem Ort, an dem sich das Gebäude befindet, und ein zweiter zur Ansteuerung in Abhängigkeit von einem definierten, programmierten Benutzungszeitraum vorgesehen sein. Ein dritter Kanal kann beispielsweise zur Ansteuerung der Beleuchtungsanlage während Zeiten, zu denen der Verkehrsweg häufig benutzt wird, beispielsweise eine Stunde vor Arbeitsbeginn und eine Stunde nach Arbeitsende, vorgesehen sein.

Ein vierter Kanal kann zur Ansteuerung der Beleuchtungsanlage für eine außerplanmäßig vorgesehene Wartung oder zur Ansteuerung bei Sonderveranstaltungen wie Straßenfesten oder Feierlichkeiten in einem Bürogebäude vorgesehen sein.

Ist die astronomische Zeitschaltuhr fernprogrammierbar, ist deren Programmierung möglich, indem durch eine kabellose Verbindung, beispielsweise über eine kabellose Netzwerkverbindung, entweder innerhalb eines Heimnetzwerks oder über das Internet, oder Bluetooth darauf zugegriffen wird. Vorteilhaft ist kein Zugang zu einem Schaltkasten, in dem sich die astronomische Zeitschaltuhr befindet, erforderlich. Wartungs- und Instandsetzungs-arbeiten können von einem entfernten Ort aus erledigt werden, beispielsweise aus einem Büro.

Denkbar ist, dass die Zeitschaltuhr durch einen sogenannten Daten-Dongle programmierbar ist. Dazu werden von einem Programmierer an einem Büroarbeitsplatz Programmierdaten auf den Daten-Dongle aufgespielt und dieser wird zur Datenübertragung in die Zeitschaltuhr eingesteckt.

Denkbar ist außerdem, dass die Programmierung der Zeitschaltuhr durch einen sogenannten Bluetooth-Dongle sowie ein Anwendungsprogramm ("App") eines Mobiltelefons oder eines Tablet-Computers erfolgt. Der Bluetooth-Dongle wird dazu in eine Schnittstelle der Zeitschaltuhr eingesteckt und kann Daten, die von dem einem Benutzer des Anwendungsprogramms erzeugt werden, drahtlos über kurze Distanz zur Zeitschaltuhr übertragen.

Vorteilhaft ist in beiden Fällen eine Möglichkeit zur Programmierung der Zeitschaltuhr bei einem Netzwerkausfall, wenn keine Fernprogrammierung mehr möglich ist, gegeben. Weiter vorteilhaft sind keine Kenntnisse in Netzwerktechnik zur Programmierung der Zeitschaltuhr erforderlich.

Durch ein elektromagnetisch oder elektrisch betätigtes Zeitrelais, das als sogenannter Treppenhausautomat ausgebildet sein kann, und das eine Dauer einer Schalterbetätigung oder eine Betätigungsfolge in eine gewünschte Beleuchtungszeit übersetzt, ist ein Einschalten der Beleuchtungsanlage möglich.

In einer weiteren Ausgestaltung der Erfindung wird das Leuchtmittel manuell eingeschaltet oder kann manuell eingeschaltet werden. Vorteilhaft kann der Verkehrsweg durch manuelles Einschalten des Leuchtmittels - innerhalb oder außerhalb des erwarteten Benutzungs-zeitraumes - beleuchtet werden, sofern dies ein individuelles Helligkeitsbedürfnis eines Benutzers des Verkehrsweges erfordert. Dies kann beispielsweise dann der Fall sein, wenn der Himmel an dem Standort des Gebäudes bewölkt ist.

In einer Ausgestaltung der Erfindung wird das Leuchtmittel innerhalb oder außerhalb des erwarteten Benutzungszeitraums durch eine einmalige, impulsartige Betätigung eines Schalters oder durch Betätigung eines Schalters mit einer definierten Betätigungsfolge eingeschaltet. Vorteilhaft ist ein manuelles Einschalten der Beleuchtungsanlage weiterhin möglich, tageslichtunabhängig und unabhängig von einem erwarteten Benutzungszeitraum. Eine Betätigungsfolge kann jede Abfolge einer Betätigung des Schalters sein, beispielsweise eine mehrfach hintereinander ausgeführte Betätigung oder eine Betätigung in der Art von Morsesignalen, beispielsweise zweimal kurz und einmal lang.

Beispielsweise kann das Leuchtmittel durch einmaliges Drücken des Schalters eingeschaltet werden für einen bestimmten Zeitraum, der zwischen 30 s und 20 min betragen kann. Dadurch wird einem individuellen Helligkeitsbedürfnis eines Benutzers des Verkehrsweges Rechnung getragen.

Denkbar ist außerdem eine komplexe Betätigungsfolge, beispielsweise eine dreifach unmittelbar nacheinander ausgeführte. Vorteilhaft wird versehentliches Einschalten der Beleuchtungsanlage für einen länger als erforderlichen Zeitraum verhindert.

Andere Zeiten sowie andere Betätigungsfolgen sind denkbar. Dadurch ist eine Servicebeleuchtung des Verkehrsweges möglich, die durch eine definierte, einprogrammierte Betätigungsfolge aktiviert wird und die eine Beleuchtung des Verkehrsweges für beispielsweise 60 min ermöglicht. Vorteilhaft sind Service- und Reinigungsarbeiten, insbesondere außerhalb des erwarteten Benutzungszeitraumes, bei ausreichender Beleuchtung des Verkehrsweges ausführbar.

Wird der Schalter nach einem manuellen Einschalten der Beleuchtungsanlage einmalig impulsartig betätigt, wird das Leuchtmittel ausgeschaltet. Vorteilhaft kann die Beleuchtungsanlage vor Ablauf des manuell angeforderten Beleuchtungszeitraums ausgeschaltet werden, beispielsweise wenn Servicearbeiten kürzer dauern als geplant.

Zweckmäßigerweise wird ein auf dem Verkehrsweg wahrnehmbares, insbesondere optisches Signal vor einem automatischen Ausschalten des Leuchtmittels ausgegeben. Ein solches optisches Hinweissignal kann beispielsweise ein Flackern oder Blinken des Leuchtmittels sein. Dazu kann ein elektromagnetisch oder elektrisch betätigtes, einstellbares Zeitrelais wie ein Treppenhausautomat vorgesehen sein, das derart eingestellt ist, dass vor Ausschalten des Leuchtmittels nach Ablauf einer Beleuchtungszeit eine kurzzeitige, gegebenenfalls mehrfache Unterbrechung einer Bestromung des Leuchtmittels, die ein Blinken bewirkt, erfolgt Ein Benutzer des Verkehrsweges kann einen deutlich wahrnehmbaren Hinweis erhalten, dass ein Ausschalten der Beleuchtungsanlage unmittelbar bevorsteht.

Sofern erforderlich, kann der Benutzer durch Betätigung eines Schalters eine Beleuchtungszeit verlängern. Vorteilhaft wird sichergestellt, dass der Verkehrsweg nicht plötzlich unbeleuchtet ist. Ein Unfallrisiko bei einer Verkehrswegbenutzung wird dadurch reduziert.

Durch ein Mittel, das insbesondere als Impulsgeber ausgebildet ist und das ein Einschalten des Leuchtmittels durch die programmierbare Steuereinheit triggert derart, dass das Zeitrelais durch die Steuereinheit aktiviert wird, wird sichergestellt, dass insbesondere kurz vor einem automatischen Ausschalten des Leuchtmittels das auf dem Verkehrsweg wahrnehmbare, insbesondere optische Signal ausgegeben wird. Ohne dieses Triggermittel würde einem Benutzer des Verkehrsweges vor dem automatischen Ausschalten kein optisches Signal ausgegeben. Ein Verletzungsrisiko, insbesondere wenn der Verkehrsweg ein Treppenhaus ist, wäre erhöht.

In einer Ausgestaltung der Erfindung wird vor einem automatischen Ausschalten des Leuchtmittels nach einem vorherigen manuellen Einschalten, vorzugsweise außerhalb des erwarteten Benutzungszeitraums, ein auf dem Verkehrsweg wahrnehmbares, insbesondere optisches Signal ausgegeben. Insbesondere für Service- oder Reparaturarbeiten, beispielsweise am frühen Abend oder nachts, ist ein solches optisches Signal erforderlich, damit eine den Verkehrsweg benutzende Person rechtzeitig auf eine bevorstehende Abschaltung der Beleuchtungsanlage hingewiesen wird. Vorteilhaft kann eine Servicebeleuchtung aktiviert oder erneut aktiviert werden, indem ein Schalter betätigt oder erneut betätigt wird.

Die Erfindung wird nachfolgend anhand von Ausführungsbeispielen und der beigefügten, sich auf die Ausführungsbeispiele beziehenden Zeichnungen, näher erläutert. Es zeigen:
- Fig. 1: Ein erfindungsgemäßes Verfahren im Detail,
- Fig. 2: Details einer Ausführungsform einer erfindungsgemäßen Einrichtung,
- Fig. 3: Details einer besonderen Ausführungsform einer erfindungsgemäßen Einrichtung.

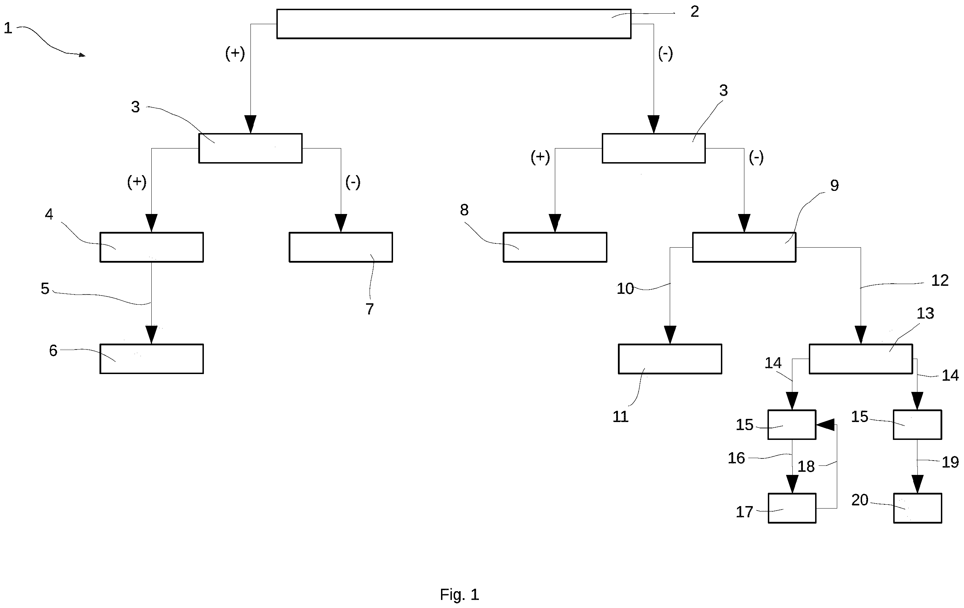

Bei einem in Fig. 1 als Flussdiagramm gezeigten Verfahren (1) zum automatisierten Ein- und Ausschalten einer Beleuchtungsanlage zur Beleuchtung eines Flurs in einem Bürogebäude wird in einem ersten Verfahrensschritt (2) anhand einer astronomischen Zeitschaltuhr für einen Ort, an dem sich der Verkehrsweg befindet, ermittelt, zu welchen Zeiten Tageslicht vorhanden ist und ob während einer momentanen Uhrzeit Tageslicht vorhanden ist. In diesem Ausführungsbeispiel ist Sonnenaufgang in Saarbrücken um 8.20.h, Sonnenuntergang um 16.33h.

Ist Tageslicht vorhanden( (+) ), wird in einem zweiten Verfahrensschritt (3) überprüft, ob die momentane Uhrzeit innerhalb eines erwarteten Benutzungszeitraums ist. Der erwartete Benutzungszeitraum ist in diesem Ausführungsbeispiel von 6.00h bis 18.00h und entspricht einer Kernarbeitszeit von Mitarbeitern in einem Bürogebäude.

Ist die momentane Uhrzeit innerhalb des erwarteten Benutzungszeitraumes, beispielsweise 12.24h, ( (+) ), wird ein Leuchtmittel der Beleuchtungsanlage nicht automatisch eingeschaltet (4), da ausreichend Tageslicht zur Beleuchtung des Verkehrsweges zur Verfügung steht. Sofern ein Benutzer des Flurs ein besonderes Helligkeitsbedürfnis hat (5), kann durch einmalige Betätigung eines Schalters das Leuchtmittel für einen bestimmten Zeitraum, beispielsweise zwei Minuten, eingeschaltet werden (6). Ein besonderes Helligkeitsbedürfnis kann insbesondere dann vorliegen, wenn der Himmel bewölkt ist.

Ist die Uhrzeit außerhalb des erwarteten Benutzungszeitraums ( (-) ), beispielsweise um 18.53h, wird das Leuchtmittel nicht automatisch eingeschaltet (7) oder ausgeschaltet, da eine Beleuchtung des Flurs mangels Benutzung nicht erforderlich ist.

Ist im ersten Verfahrensschritt (2) festgestellt worden, dass kein Tageslicht vorhanden ist ((-)), wird einem zweiten Verfahrensschritt (3) überprüft, ob die momentane Uhrzeit innerhalb des erwarteten Benutzungszeitraums ist.

Ist dies der Fall ( (+) ), wird ein Leuchtmittel der Beleuchtungsanlage automatisch eingeschaltet (8) oder nicht automatisch ausgeschaltet, da eine Beleuchtung des Flurs erforderlich ist.

Ist die momentane Uhrzeit außerhalb des erwarteten Benutzungszeitraums ( (-) ), wird ein Leuchtmittel der Beleuchtungsanlage nicht automatisch eingeschaltet (9), da eine Beleuchtung des Flurs nicht erforderlich ist.

Damit außerhalb eines Benutzungszeitraums, zu dem kein ausreichendes Tageslicht zur Beleuchtung des Verkehrsweges vorhanden ist, eine Beleuchtung erfolgen kann, ist ein manuelles Einschalten des Leuchtmittels möglich. Durch einmalige Betätigung (10) eines Schalters wird das Leuchtmittel für einen definierten Zeitraum eingeschaltet (11).

Wird der Schalter einmalig für fünf Sekunden betätigt (12), wird ein Servicemodus aktiviert, das heißt das Leuchtmittel wird für einen Zeitraum von einer Stunde eingeschaltet (13). In dieser Zeit können beispielsweise Reinigungsarbeiten erfolgen. Nach Ablauf dieser Zeit (14) wird ein optisches Signal (15) ausgegeben, das beispielsweise ein kurzzeitiges Blinken aller Leuchtelemente des Leuchtmittels sein kann. Dadurch wird einem Benutzer des Flurs signalisiert, dass ein Ausschalten der Beleuchtungsanlage unmittelbar bevorsteht. Durch erneutes Betätigen des Schalters (16) für mindestens 5 s zu einem beliebigen Zeitpunkt während der einen Stunde wird der Verkehrsweg für eine mit der Schalterbetätigung beginnenden einen Stunde beleuchtet (17). Es versteht sich, dass nach deren Ablauf (18) das optische Signal (15) erneut ausgegeben wird.

Bleibt ein Betätigen des Schalters trotz des Signals (15) aus (19), wird das Leuchtmittel nach Ablauf der manuellen Einschaltzeit automatisch ausgeschaltet (20).

Der Servicemodus kann durch einmalige, impulsartige Betätigung des Schalters beendet und das Leuchtmittel ausgeschaltet werden.

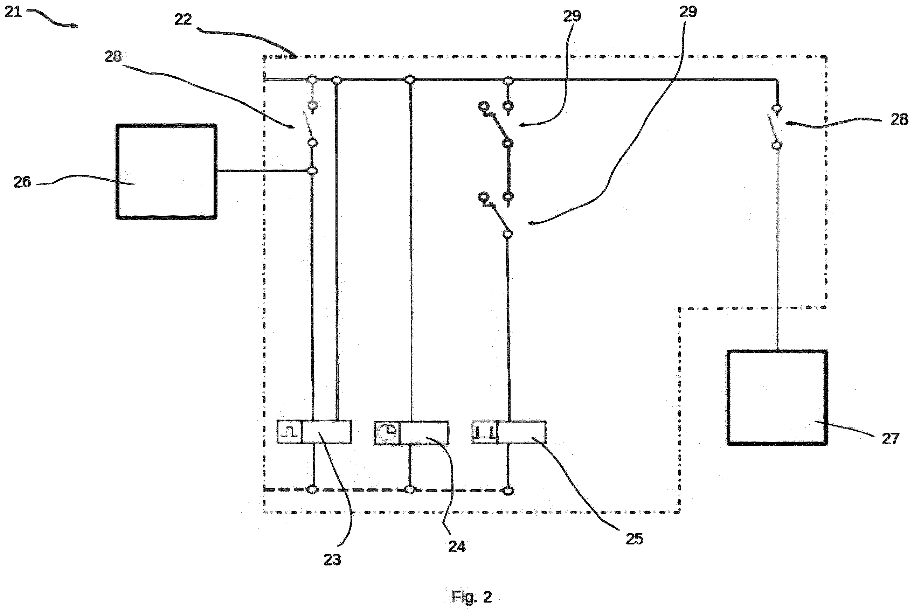

Es wird nun auf Fig. 2 Bezug genommen, wo gleiche oder gleichwirkende Teile mit derselben Bezugszahl wie in Fig. 1 bezeichnet sind und der betreffenden Bezugszahl jeweils der Buchstabe a beigefügt ist.

Ein in Fig. 2 in einer vereinfachten Dachstellung gezeigter Schaltplan einer erfindungsgemäßen Einrichtung (21) zeigt ein Ein- und Ausschaltmittel (22), das zur Ergänzung oder zum wenigstens teilweisen Ersatz einer Steuerung in einem bestehenden elektrischen Schaltschrank vorgesehen und das drei Bauteile (23-25) umfasst.

Ein erstes Bauteil (23) ist ein Treppenhausautomat, der ein Leuchtmittel zur Erhöhung von dessen Lebensdauer im Spannungsnulldurchgang schaltet. Eine einmalige, impulsartige Betätigung eines Lichtschalters bewirkt ein Einschalten des Leuchtmittels für beispielsweise 2 Minuten, während eine 5 s dauernde Betätigung eine Servicebeleuchtung für eine Dauer von 60 min aktiviert. Die Servicebeleuchtung ermöglicht länger andauernde Service- oder Wartungsarbeiten im Bereich des Verkehrsweges - tageslichtunabhängig sowie unabhängig von einem erwarteten Benutzungszeitraum. Ferner ist der Treppenhausautomat (23) dazu vorgesehen, vor einem automatischen Abschalten eines Leuchtmittels ein optisches Hinweissignal zu erzeugen, das beispielsweise ein mehrfaches Blinken sein kann und das von einem Benutzer des Verkehrsweges deutlich wahrnehmbar ist.

Ein zweites Bauteil (24) ist eine programmierbare astronomische Zeitschaltuhr mit zwei Kanälen, von denen ein erster Kanal zur Tageslichtbestimmung aufgrund des geografischen Ortes des Verkehrsweges vorgesehen ist und ein zweiter Kanal zur Definition eines erwarteten Benutzungszeitraumes.

Ein drittes Bauteil (25) ist ein Impulsgeber, durch den sichergestellt wird, dass der Treppenhausautomat (23) bei einem automatischen Einschalten des Leuchtmittels - innerhalb eines erwarteten Benutzungszeitraumes und bei zur Beleuchtung des Verkehrsweges nicht ausreichendem Tageslicht - derart angesteuert wird, als würde ein Lichtschalter im Bereich des Verkehrsweges mehrfach betätigt. Dessen Ansteuerung erfolgt vorzugsweise durch die programmierbare astronomische Zeitschaltuhr (24).

Am Ende eines solches Zykluses kann durch den Treppenhausautomaten (23) das optische Hinweissignal erzeugt werden.

Eine Schalteranforderung, das heißt eine manuelle Betätigung eines Schalters, durch die der Treppenhausautomat (23) unmittelbar angesteuert wird, ist in Fig. 2 vereinfacht als schwarze Box (26) dargestellt. Ein Ausgangssignal der Einrichtung, das heißt eine Bestromung eines Leuchtmittels der Beleuchtungsanlage, ist vereinfacht als weitere schwarze Box (27) dargestellt. Steuerungsinterne Schalter sind in Fig. 2 mit (28, 29) bezeichnet, wobei (29) Kanäle der astronomischen Zeitschaltuhr (23) sind.

Die drei Bauteile (23-25) sind elektrisch derart miteinander verbunden, dass eine Beleuchtungsanlage bei ausreichendem Tageslicht sowie während eines erwarteten Benutzungszeitraums nicht automatisch eingeschaltet ist oder/und außerhalb des Benutzungszeitraums automatisch ausgeschaltet wird oder bleibt, ein manuelles Einschalten der Beleuchtungsanlage jedoch jederzeit möglich ist. Überlappungen der beiden Zeiträume - Tageslicht und erwarteter Benutzungszeitraum - sind durch die astronomischen Zeitschaltuhr (24) vorgegeben.

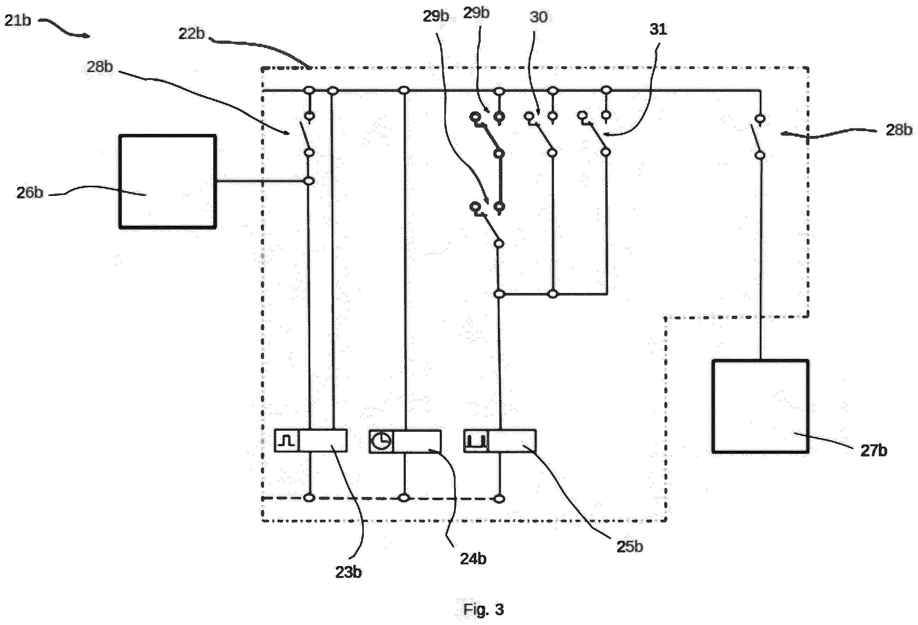

Es wird nun auf Fig. 3 Bezug genommen, wo gleiche oder gleichwirkende Teile mit derselben Bezugszahl wie in Fig. 1 und 2 bezeichnet sind und der betreffenden Bezugszahl jeweils der Buchstabe b beigefügt ist.

Ein in Fig. 3 in einer vereinfachten Dachstellung gezeigter Schaltplan einer erfindungsgemäßen Einrichtung (21c) unterscheidet sich von demjenigen in Fig. 2 gezeigten dadurch, dass eine astronomische Zeitschaltuhr (24b) insgesamt 4 Kanäle (29b, 30, 31) aufweist. Ein dritter Kanal (30) ist zur Ansteuerung einer Beleuchtungsanlage für eine geplante, regelmäßige und an Wochenenden stattfindende Nutzung, insbesondere Wartungsarbeiten, in einem Flur eines Bürogebäudes, in dem sich die Beleuchtungsanlage befindet, vorgesehen, während ein vierter Kanal (31) zur Ansteuerung der Beleuchtungsanlage bei einer einmaligen Nutzung, beispielsweise einer abendlichen Feier, in dem Bürogebäude vorgesehen ist.

## Patentansprüche

1. Verfahren (1) zum automatisierten Ein- und Ausschalten einer Beleuchtungsanlage zur Beleuchtung eines Verkehrsweges innerhalb oder außerhalb eines Gebäudes, wobei ein Leuchtmittel der Beleuchtungsanlage in Abhängigkeit von einem Ort, an dem sich das Gebäude befindet, und einem erwarteten Benutzungszeitraum ein- oder ausgeschaltet wird,
**dadurch gekennzeichnet,**
**dass** eine programmierbare Steuereinheit über einen Impulsgeber periodisch ein Einschalten des Leuchtmittels triggert.

2. Verfahren nach Anspruch 1,
**dadurch gekennzeichnet,**
**dass** das Leuchtmittel innerhalb des erwarteten Benutzungszeitraumes nur dann automatisch eingeschaltet wird, sofern an dem Ort, an dem sich das Gebäude befindet, kein zur Beleuchtung des Verkehrsweges ausreichendes Tageslicht zur Verfügung steht.

3. Verfahren nach Anspruch 1 oder 2,
**dadurch gekennzeichnet,**
**dass** das Leuchtmittel zusätzlich manuell eingeschaltet wird oder werden kann.

4. Verfahren nach einem der Ansprüche 1 bis 3,
**dadurch gekennzeichnet,**
**dass** das Leuchtmittel innerhalb oder außerhalb des erwarteten Benutzungszeitraums durch eine einmalige, impulsartige Betätigung eines Schalters oder durch Betätigung eines Schalters mit einer definierten Betätigungsfolge eingeschaltet wird.

5. Verfahren nach einem der Ansprüche 1 bis 4,
**dadurch gekennzeichnet,**
**dass** ein auf dem Verkehrsweg wahrnehmbares, insbesondere optisches Signal vor einem automatischen Ausschalten des Leuchtmittels ausgegeben wird.

6. Verfahren nach einem der Ansprüche 1 bis 5,
**dadurch gekennzeichnet, dass** vor einem automatischen Ausschalten des Leuchtmittels nach einem vorherigen manuellen Einschalten, vorzugsweise außerhalb des erwarteten Benutzungszeitraums, oder nach einem vorherigen automatischen Einschalten ein auf dem Verkehrsweg wahrnehmbares, insbesondere optisches Signal ausgegeben wird.

7. Einrichtung (21) zum automatisierten Ein- und Ausschalten einer Beleuchtungsanlage zur Beleuchtung eines Verkehrsweges innerhalb oder außerhalb eines Gebäudes, die ein Mittel (22) zum zeitgesteuerten Ein- und Ausschalten eines Leuchtmittels umfasst, das eine programmierbare Steuereinheit aufweist und dazu eingerichtet ist, das Leuchtmittel in Abhängigkeit von einem Ort, an dem sich das Gebäude befindet, und einem erwarteten Benutzungszeitraum ein- oder auszuschalten,
**dadurch gekennzeichnet,**
**dass** die programmierbare Steuereinheit dazu eingerichtet ist, über einen Impulsgeber periodisch ein Einschalten des Leuchtmittels zu triggern.

8. Einrichtung nach Anspruch 7,
**dadurch gekennzeichnet,**
**dass** die programmierbare Steuereinheit (24) eine vorzugsweise fernprogrammierbare astronomische Zeitschaltuhr aufweist.

9. Einrichtung nach Anspruch 7 oder 8,
**dadurch gekennzeichnet,**
**dass** das Ein- und Ausschaltmittel ein elektromagnetisch oder elektrisch betätigtes Zeitrelais (23), insbesondere einen Treppenhausautomaten aufweist, der dazu eingerichtet ist, anhand einer Dauer einer manuellen Betätigung eines Schalters die Beleuchtungsanlage für einen definierten Zeitraum einzuschalten, vorzugsweise für 2 Minuten bei einer einmaligen, impulsartigen Betätigung und 60 Minuten bei einer 5 Sekunden dauernden Betätigung.

10. Einrichtung nach einem der Ansprüche 7 bis 9,
**dadurch gekennzeichnet,**
**dass** das Ein- und Ausschaltmittel elektronische Bauteile (23-25) umfasst, die zum Einbau in einen Schaltkasten vorgesehen sind.

## Claims

1. Method (1) for automatically switching on and off a lighting system for illuminating a route inside or outside a building, wherein a light source of the lighting system is switched on or off as a function of a location at which the building is located and an expected period of use,
**characterized in that** a programmable control unit (24) periodically triggers the light source to be switched on via a pulse generator.

2. Method according to claim 1,
**characterized in that** the illuminant is only switched on automatically within the expected period of use if there is no sufficient daylight available at the location of the building to illuminate the route.

3. Method according to claim 1 or 2,
**characterized in that** the light source is or can be additionally switched on manually.

4. Method according to one of claims 1 to 3,
**characterized in that** the illuminant is switched on within or outside the expected period of use by a single, pulse-like actuation of a switch or by actuation of a switch with a defined actuation sequence.

5. Method according to one of claims 1 to 4,
**characterized in that** a signal which is perceptible on the route, in particular an optical signal, is emitted before the illuminant is automatically switched off.

6. Method according to one of claims 1 to 5,
**characterized in that** a signal, in particular an optical signal, which is perceptible on the route is emitted before the light source is switched off automatically after it has previously been switched on manually, preferably outside the expected period of use, or after it has previously been switched on automatically.

7. Device (21) for automatically switching on and off a lighting system for illuminating a route inside or outside a building, which comprises a means (22) for switching an illuminant on and off in a time-controlled manner, which has a programmable control unit and is designed to switch the illuminant on or off as a function of a location at which the building is located and an expected period of use,
**characterized in that** the programmable control unit is designed to periodically trigger a switch-on of the illuminant by means of a pulse generator (25).

8. Device according to claim 7,
**characterized in that** the programmable control unit (24) comprises a preferably remotely programmable astronomical timer.

9. Device according to claim 7 or 8,
**characterized in that** the means for switching the illuminant on and off comprises an electromagnetically or electrically actuated time relay (23), in particular an automatic staircase switch, which is designed to switch on the lighting system for a defined period of time on the basis of a duration of a manual actuation of a switch, preferably for 2 minutes in case of a single, pulse-like actuation and 60 minutes in the case of an actuation lasting 5 seconds.

10. Device according to one of claims 7 to 9,
**characterized in that** the means for switching the illuminant on and off comprises electronic components (23-25) which are provided for installation in a switch box.

## Revendications

1. Procédé (1) d'allumage et d'extinction automatiques d'un système d'éclairage destiné à éclairer une voie de communicatoin à l'intérieur ou à l'extérieur d'un bâtiment, dans lequel une source lumineuse du système d'éclairage est allumée ou éteinte en fonction de l'emplacement du bâtiment et d'une période d'utilisation prévue, **caractérisé en ce qu'**une unité de commande programmable (24) déclenche périodiquement la source lumineuse par un générateur d'impulsions.

2. Procédé selon la revendication 1,
**caractérisé en ce que** la source lumineuse n'est allumé automatiquement pendant la période d'utilisation prévue que s'il n'y a pas suffisamment de lumière du jour disponible à l'emplacement du bâtiment pour éclairer la voie de comunication.

3. Procédé selon la revendication 1 ou 2,
**caractérisée en ce que** la source lumineuse est ou peut être allumée en plus manuellement.

4. Procédé selon l'une des revendications 1 à 3,
**caractérisé en ce que** la source lumineuse est allumé pendant ou en dehors de la période d'utilisation prévue par l'actionnement d'un interrupteur en une seule fois, sous forme d'impulsion, ou par l'actionnement d'un interrupteur selon une séquence d'actionnement définie.

5. Procédé selon l'une des revendications 1 à 4,
**caractérisé en ce qu'**un signal perceptible sur la voie de communicatoin, en particulier un signal optique, est émis avant l'extinction automatique de l'éclairage.

6. Procédé selon l'une des revendications 1 à 5,
**caractérisé en ce qu'**un signal, en particulier un signal optique, perceptible sur la voie de communication est émis avant que la source lumineuse ne s'éteigne automatiquement après avoir été allumée manuellement, de préférence en dehors de la période d'utilisation prévue, ou après avoir été allumée automatiquement.

7. Dispositif (21) pour l'allumage et l'extinction automatiques d'un système d'éclairage d'une voie de communication à l'intérieur ou à l'extérieur d'un bâtiment, qui comprend un moyen (22) d'allumage et d'extinction temporisés d'une source lumineuse, qui est doté d'une unité de commande programmable et qui est conçu pour allumer ou éteindre la source lumineuse en fonction du lieu où se trouve le bâtiment et d'une période d'utilisation prévue,
**caractérisé en ce que** l'unité de commande programmable est conçue pour déclencher périodiquement l'allumage de la source lumineuse par un générateur d'impulsions (25).

8. Dispositif selon la revendication 7,
**caractérisé en ce que** l'unité de commande programmable (24) comprend une minuterie astronomique de préférence programmable à distance.

9. Dispositif selon la revendication 7 ou 8,
**caractérisé en ce que** le moyen d'allumage et d'extinction de la source lumineuse comprend un relais temporisé (23) à actionnement électromagnétique ou électrique, en particulier un interrupteur automatique de cage d'escalier, qui est conçu pour allumer le système d'éclairage pendant une période de temps définie sur la base d'une durée d'actionnement manuel d'un interrupteur, de préférence pendant 2 minutes en cas d'actionnement unique en forme d'impulsion et pendant 60 minutes en cas d'actionnement d'une durée de 5 secondes.

10. Dispositif selon l'une des revendications 7 à 9,
**caractérisé en ce que** le moyen d'allumage et d'extinction de la source lumineuse comprend des composants électroniques (23-25) qui sont prévus pour être installés dans une boîte de commutation.
